# EUROPEAN PATENT APPLICATION

(11) **EP 3 851 966 A1**
(43) Date of publication of application: **21.07.2021**
(21) Application number: 18933895.7
(22) Date of filing: 02.11.2018
(51) Int. Cl.: G06F 11/34

(54) **METHOD FOR ACQUIRING LAUNCHING DURATION OF APPLICATION INTERFACE, APPARATUS, AND TERMINAL DEVICE**

(30) Priority: 21.09.2018 CN 201811109357
(71) Applicant: Wangsu Science & Technology Co., Ltd, Shanghai 201800 (CN)
(72) Inventor: SU, Xiaoqiang, Shanghai 201800 (CN)
(74) Representative: De Arpe Tejero, Manuel
(86) International application number: PCT/CN2018/113732
(87) International publication number: WO 2020/056878

(57) **Abstract**

The present disclosure relates to the field of terminal device technology, and discloses a method, an apparatus and a terminal device for acquiring an application interface startup time. In the present disclosure, a first time point when an instruction to launch an application interface is invoked is recorded. A rendering task message is monitored and each time when the rendering task message is received, a current time point is recorded as a time point of the rendering task message. The time point of a first occurrence of the rendering task message that satisfies a pre-set condition from the chronologically recorded time points of a plurality of rendering task messages is recorded as a second time point. The pre-set condition includes that a time difference between the time point of the rendering task message and the time point of a succeeding rendering task message is equal to a pre-set time duration. A time difference between the first time point and the second time point is treated as the application interface startup time. The acquired startup time is accurate, and the implementation is simple. The method can be directly integrated into the application program to save workload of testers.

## Description

### FIELD OF THE DISCLOSURE

The present disclosure relates to the field of terminal device technology, and more particularly, relates to a method, an apparatus and a terminal device for acquiring an application interface startup time.

### BACKGROUND

As products and services continue to develop iteratively, application scenarios become more and more complicated and user interactions become more and more frequent. Inevitably, application performance such as a startup time of an application interface will be a major concern. The more complicated the application scenario is, the more workload the application undertakes. As such, a length of time from a time point a user performs an operation to launch an application interface to the time point the application interface is rendered and displayed to the user increases. When being executed by different terminal devices, a same program may have different performances due to performance variations of hardware, networking, and device system. In one case that one device executes the program, the performance is good, and the application interface startup time is short. In another case that another device executes the same program, the performance is bad, and the application interface startup time is long. Thus, correctly acquiring and collecting data of startup time of various application interfaces in the process of user operations will play an important role in optimizing performance by developers.

Because a system API (Application Program Interface) alone is often unable to correctly calculate the application interface startup time, at most the system API can only obtain the time point the system invokes an instruction to launch the application interface and the time point the system has completed construction of the framework of the to-be-launched application interface but has not completed rendering or drawing of the application interface, while the time point the application interface is completely displayed to the user is needed.

A common practice in the existing technology includes manually testing the application interface startup time by testers and the developers optimize the performance based on test data. This method has the following disadvantages.
(1) The tester's workload is substantial but only limited use cases are covered. It is difficult to cover every scenario of all the devices on the market.
(2) The pertaining performance data are collected only in the testing phase of the application. Once the application goes online, the performance data can no longer be collected.

Because the time point the application interface is completely rendered and displayed to the user can only be determined by human eyes, the system does not give a callback notification at that time point. As such, some publicly disclosed technical solutions rely on image acquisition, image recognition, and image matching, combined with hardware such as a device camera, to determine the time point the rending of the application interface is completed by a machine running scripts rather than human eyes. Thus, the human workload of collecting the performance data is reduced.

Although the above described technical solution may accurately acquire the application interface startup time, it requires support by certain hardware configuration and is difficult to implement, thereby impractical to be widely applied to real life online products.

### BRIEF SUMMARY OF THE DISCLOSURE

The objective of the present disclosure is to provide a method, an apparatus and a terminal device for acquiring an application interface startup time, capable of accurately acquiring the application interface startup time and being integrated into an application program, easy to implement, and saving workload of testers.

To solve the above described technical problem, the present disclosure provides a method for acquiring an application interface startup time. The method includes the following process. A first time point when an instruction to launch an application interface is invoked is recorded. A rendering task message is monitored and each time when the rendering task message is received, a current time point is recorded as a time point of the rendering task message. The time point of a first occurrence of the rendering task message that satisfies a pre-set condition from the chronologically recorded time points of a plurality of rendering task messages is recorded as a second time point. The pre-set condition includes that a time difference between the time point of the rendering task message and the time point of a succeeding rendering task message is equal to a pre-set time duration. A time difference between the first time point and the second time point is treated as the application interface startup time.

The present disclosure also provides an apparatus for acquiring the application interface startup time. The apparatus includes a recording module configured to record a first time point when an instruction to launch an application interface is invoked, a monitoring module configured to monitor a rendering task message, and an application interface startup determination module configured to record a time point of a first occurrence of the rendering task message that satisfies a pre-set condition as a second time point from the chronologically recorded time points of a plurality of rendering task messages. The recording module is further configured to record a current time point as the time point of the rendering task message each time the rendering task message is received. The pre-set condition includes that a time difference between the time point of the rendering task message and the time point of the succeeding rendering task message is equal to a pre-set time duration. A time difference between the first time point and the second time point is treated as the application interface startup time.

The present disclosure also provides a terminal device. The terminal device includes at least one processor and a memory communicatively coupled to the at least one processor. The memory stores instructions to be executed by the at least one processor. The instructions are executed by the at least one processor to enable the at least one processor to perform the disclosed method for acquiring the application interface startup time.

The present disclosure also provides a computer readable storage medium for storing a computer program. The computer program being executed by a processor performs the disclosed method for acquiring the application interface startup time.

In the present disclosure, the first time point when the instruction to launch the interface is invoked is recorded as the starting time when the application program interface starts. In the rendering process, after the apparatus completes the complicated and time-consuming operations, the apparatus often refreshes the newly rendered interface according to the stringent rendering frequency (i.e., the interval between two adjacent rendering task messages is the specific time interval). Based on this mechanism, the apparatus obtains the time point of the first occurrence of refreshing the interface at the rendering frequency as the ending time when the application interface startup is completed. Based on the starting time and the ending time, the accurate application interface startup time is obtained. Moreover, because the time points are recorded by the terminal device, the process may be directly integrated into the application program to achieve the objectives of collecting massive data of the online users in a wide range of use cases without requiring a large number of dedicated testers to perform manual testing, thereby saving labor cost.

Further, monitoring the rendering task message includes continuing to monitor the rendering task message until an *N*th rendering task message is received, where *N* is a pre-set number. In most scenarios, the terminal device processes the complicated and time-consuming operations of the application interface startup within a certain number of frames. Collecting the time points of the rendering task messages in the first *N*th frames may represent most scenarios for the developers to analyze the performance issues.

Further, monitoring the rendering task message includes: each time when the rendering task message is received, determining whether the time point of a preceding rendering task message satisfies the pre-set condition; and after the time point of the first occurrence of the rendering task message that satisfies the pre-set condition is recorded, discontinuing the monitoring of the rendering task message. The rendering mechanism refreshes the interface stringently according to a certain refreshing frequency under the circumstances of normal user interactions and smooth interface refreshing. That is, the time difference between two adjacent rendering task messages is fixed. Thus, if the terminal device determines that the time point of a preceding rendering task message satisfies the pre-set condition, it indicates that the application program has been running normally, and the rendering task message no longer needs to be monitored.

Further, recording the first time point when the instruction to launch the application interface is invoked includes: monitoring a life cycle of each of all interfaces of the application; and after a monitoring callback notification of the life cycle of the application interface is received, recording the time point of receiving the monitoring callback notification as the first time point.

Further, the method for acquiring the application interface startup time further includes uploading the chronologically recorded time points of the plurality of rendering task messages to a server. The recorded time points of the rendering task messages include important event tracker information and approximate time information of the interface rendering. Uploading the recorded time points of the plurality of rendering task messages to the server facilitates the developers to analyze performance issues.

### BRIEF DESCRIPTION OF THE DRAWINGS

One or more embodiments are described with reference to accompanying drawings. However, the description is intended to be illustrative and not to limit the present disclosure.
FIG. 1 illustrates a flow chart of an exemplary method for acquiring a startup time of an application interface according to disclosed embodiments;
FIG. 2 illustrates a flow chart of another exemplary method for acquiring a startup time of an application interface according to disclosed embodiments;
FIG. 3 illustrates a schematic diagram of received rendering task messages over time according to disclosed embodiments;
FIG. 4 illustrates a schematic diagram of an exemplary apparatus for acquiring the startup time of an application interface according to disclosed embodiments; and
FIG. 5 illustrates a schematic diagram of an exemplary terminal device according to disclosed embodiments.

### DETAILED DESCRIPTION

To make the objectives, technical solutions, and advantages of the present disclosure clearer, the following further describes the embodiments of the present disclosure in details with reference to the accompanying drawings. It will be apparent to those skilled in the art that, in various embodiments of the present disclosure, many technical details are presented to assist the readers to better understand the present disclosure. However, in absence of the technical details, changes and modifications may be made to the embodiments disclosed in the present disclosure to implement the technical solutions claimed in the present disclosure.

The present disclosure provides a method for acquiring an application interface startup time. In one embodiment, a first time point that an instruction to launch the application interface is executed is recorded. A rendering task message is detected. Each time when the rendering task message is detected, a current time point is recorded as the time point of the rendering task message. A plurality of time points of the rendering task messages may be recorded chronologically. The first time point in the plurality of time points of the rendering task messages that satisfies a pre-set condition is recorded as a second time point. The pre-set condition includes that a time difference between the time point of the rendering task message and the time point of a succeeding rendering task message is equal to a pre-set time duration. The time difference between the first time point and the second time point is considered as the application interface startup time.

In the present disclosure, the first time point when the system invokes the instruction to launch the application interface is recorded as a starting time the application program interface starts a startup process. In a rendering process, after an apparatus completes sophisticated and time-consuming operations, the apparatus often refreshes the newly rendered interface according to a stringent rendering frequency (i.e., an interval between two adjacent rendering task messages is a specific time interval). Based on this mechanism, the apparatus obtains the time point of a first occurrence of refreshing the interface according to the rendering frequency as an ending time the application program interface completes the startup process. Thus, the accurate startup time of the application program interface may be obtained based on the starting time and the ending time. Moreover, because the time points are recorded by a terminal device, the process can be integrated into the application program to collect massive data of online users, thereby covering a wide range of application scenarios without requiring dedicated testers to perform a substantial amount of testing and substantially saving manual labors.

In the embodiments of the present disclosure, the method for acquiring the application interface startup time will be described in detail. The implementation details are intended for convenience of understanding, but not for limiting the present disclosure.

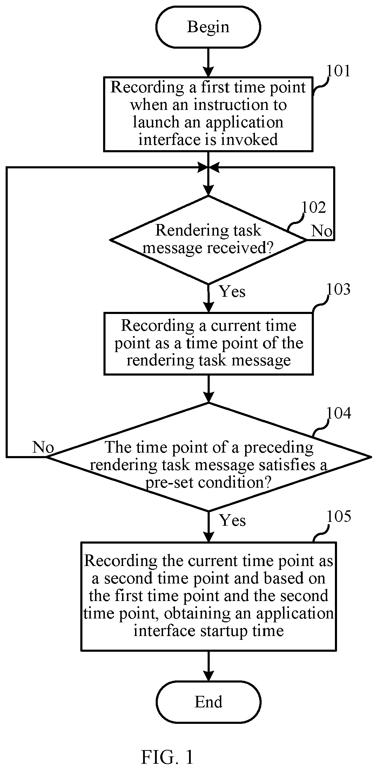

FIG. 1 illustrates a flow chart of an exemplary method for acquiring a startup time of an application interface according to disclosed embodiments. As shown in FIG. 1, the method includes the following process.

At step 101: a terminal device records a first time point when an instruction to launch an application interface is invoked. The terminal device may be a smartphone, a computer, a tablet, or other suitable terminal devices.

For illustrative purposes, the terminal device is an Android system terminal. The terminal device may record the first time point when the instruction to launch the application interface is invoked in two methods. In the first method, an event tracker is created in a source program to record a current time point T1 each time the instruction startActivity() is executed. T1 is the first time point when the instruction to launch the interface is invoked. In the second method, a life cycle of each of all interfaces of the application is monitored. After a monitoring callback notification of the life cycle of the application interface is received, the time point of receiving the monitoring callback notification is recorded as the first time point. In other words, in the entry point of the terminal application, the instruction "ActivityLifecycleCallbacks" is used to register to monitor the life cycle of the application interface. Upon receiving the onAcitivityCreated() callback, the current time point is recorded as T1. The Android system is intended to be exemplary. The technical solution provided by the present disclosure applies to other operating systems and is not limited to the Android system. When applied to a different operating system, the function calls may be adjusted accordingly based on the configuration of the operating system.

In the first method, the recorded time point is accurate, but the implementation is complicated. A plurality of event trackers is required to be created in the source program to include the program code for the process. In the second method, the recorded time point is slightly delayed, but the implementation is simple. The program code for the process is required to be inserted at the entry point of the source program. Although the recorded time point is after the instruction to launch the interface is invoked, the recorded time point is before operations of various application scenarios, drawing, and rendering corresponding to the interface start. As such, the slight delay has limited impact. Either of the two methods may be used to implement the process. Based on the actual requirements, one of the two methods may be selected to record the first time point when the instruction to launch the interface is invoked.

In steps 102 through 105, rendering task messages are monitored. For the illustrative purposes, the terminal device is the Android system. The Android system is driven by messages. A process of executing the application includes processing each and every message. Each message often includes one or more tasks. For example, invoking the instruction to launch the interface is a task, drawing the interface is a task, processing the application scenario is a task, and rendering and displaying to the user is a task. At any time point, only one message is processed, and other messages are queued waiting for execution. Refreshing and displaying the terminal device interface rely on a rendering mechanism and refreshing the interface is performed at a fixed frequency. For example, in the Android system, the refreshing frequency is fixed to 60 fps (frames/second). In other words, under a normal circumstance, one task of rendering the interface in every about 16.6 ms may be included in one message, entering a message queue waiting for execution.

The reason why the startup of the application interface is time-consuming is because operations on the interface in various application scenarios, calculations and painting of the user interface (UI) and rendering operations of the interface are performed after the construction of the framework of the application interface is completed. In response to one or more of substantially complicated application scenarios of the product, excessive number of tasks required to be processed, substantially complicated user interface, and excessively deep view hierarchy due to nested controls, corresponding operations may be time-consuming. When the user finally sees the interface rendering and displaying, the operations have to be completed, thereby degrading user experience. Thus, in one embodiment, the rendering task message is monitored. In the rendering process, after the apparatus completes the complicated and time-consuming operations, the apparatus often refreshes the newly rendered interface according to a stringent rendering frequency (i.e., an interval between two adjacent rendering task messages is a specific time interval). Based on this mechanism, the apparatus obtains the ending time when the application interface startup is completed.

The steps 102 through 104 of the present disclosure are described in detail below.

At step 102: whether a rendering task message is received is determined. If it is determined that the rendering task message is received, the step 103 is executed. Otherwise, the step 102 is executed again.

In one embodiment, the terminal device monitors the rendering task message in the following way. In the source program, the system instruction "Choreographer.postFrameCallback()" is used to register to monitor the callback notification of the rendering task execution. When the rendering task message of the current interface in the system message queue is executed, the system instruction "Choreographer.FrameCallback.doFrame() will be called back. The time point when the callback notification is received is recorded as the time point of the rendering task message.

In other words, the terminal device determines whether the rendering task message is received by monitoring whether the rendering task is executed. Upon receiving the callback notification, it is determined that the rendering task is executed. That is, the rendering task message is received. At this time, the step 103 is executed to record the current time point as the time point of the received rendering task message. Otherwise, the rendering task message continues to be monitored.

At step 104, whether the time point of a preceding rendering task message satisfies a pre-set condition is determined. If the time point of the preceding rendering task message satisfies the pre-set condition, the step 105 is executed. Otherwise, the step 102 is executed to continue to monitor the succeeding rendering task message.

In one embodiment, the pre-set condition includes that the time difference between the time point of the rendering task message and the time point of the succeeding rendering task message is equal to the pre-set time duration. The pre-set time duration may be an interval between two adjacent interface refreshing during a process of executing the application program. If the terminal device determines that the time point of the preceding rendering task message satisfies the pre-set condition, it indicates that the application program has been running normally, the rendering task message no longer needs to be monitored, and the step 105 is executed. Otherwise, the step 102 is executed to continue to monitor the rendering task message.

Specifically, whether the time point of the preceding rendering task message satisfies the pre-set condition may be determined in the following way.

The time points of two most recent rendering task messages are compared to calculate the slopes thereof. When the most recently recorded time point is calculated to approach 60 fps, i.e., the interval between the time points of the two most recent rendering task messages is approximately 16.6 ms, it is determined that the complicated operations in the current interface page have already been completed, i.e., the interface has been displayed to the user.

Because refreshing and displaying the interface of the terminal device rely on the rendering mechanism, refreshing the interface is performed at the fixed frequency. For example, in the Android system devices, the refreshing frequency is fixed at 60 fps. In other words, under a normal circumstance, during the process of executing the application program, one task of rendering the interface in every about 16.6 ms may be included in one message, entering a message queue waiting for execution. If the time difference between the time points of two adjacent rendering task messages is approximately equal to the interval between two adjacent interface refreshing during the process of executing the application program, it indicates that the application program interface has been drawn. The first time point that satisfies this condition is the time point when the application program interface has been drawn, rendered, and displayed to the user.

If the time difference between the time points of two adjacent rendering task messages is substantially different from the interval between two adjacent interface refreshing during the process of executing the application program, it indicates that the application program interface has not been drawn and the monitoring will continue.

At step 105, the time point of the rendering task message that satisfies the pre-set condition is recorded as a second time point, and based on the first time point and the second time point, the application interface startup time is obtained.

In one embodiment, in the steps 102 through 104, each time the rendering task message is received, the current time is recorded as the time point of the rendering task message until the time point of the rendering task message that satisfies the pre-sent condition is obtained. The time point of the rendering task message that satisfies the pre-set condition is the time point when the application program interface has been drawn and is recorded as the second time point. At the second time point, the application is ready for normal user interactions. No more time points need to be recorded. The terminal device no longer monitors the rendering task message.

Because the first time point is the time point when the instruction to launch the application interface is invoked and the second time point is the time point when the application program interface has been drawn, based on the first time point and the second time point, the application interface startup time is obtained. That is, the time difference between the first time point and the second time point is the application interface startup time.

In one embodiment, the terminal device calculates the time difference between the first time point and the second time point. In another embodiment, a server calculates the time difference between the first time point and the second time point. For example, the terminal device records the time points of a plurality of rendering task message and uploads them to the server. The server calculates the time difference between the first time point and the second time point to obtain the application interface startup time. Because the recorded time points of the rendering task messages include approximate time information of the interface rendering, uploading the recorded time points of the plurality of rendering task messages to the server facilitates the developers to analyze performance issues of the device. Moreover, uploading the recorded time points of the plurality of rendering task messages to the server allows the server to determine whether any of the time points of the plurality of rendering task messages satisfies the pre-set condition based on the uploaded time points of the plurality of rendering task messages. The server notifies the terminal device when the server determines that one of the time points of the plurality of rendering task messages satisfies the pre-set condition. That is, in practical applications, based on a notification message from the server, the terminal device may determine whether one of the time points of the plurality of rendering task messages satisfies the pre-set condition.

In one embodiment, the first time point when the instruction to launch the interface is invoked is recorded as the starting time when the application program interface starts. In the rendering process, after the apparatus completes the complicated and time-consuming operations, the apparatus often refreshes the newly rendered interface according to the stringent rendering frequency (i.e., the interval between two adjacent rendering task messages is the specific time interval). Based on this mechanism, the apparatus obtains the time point of the first occurrence of refreshing the interface at the rendering frequency as the ending time when the application interface startup is completed. Based on the starting time and the ending time, the accurate application interface startup time is obtained. Moreover, because the time points are recorded by the terminal device, the process may be directly integrated into the application program to achieve the objectives of collecting massive data of the online users in a wide range of use cases without requiring a large number of dedicated testers to perform manual testing, thereby saving labor cost.

The present disclosure provides another method of acquiring the application interface startup time. The two methods are similar. The primary differences are described below. In the previously described embodiments, after each rendering task message is received, whether the time point of the preceding rendering task message satisfies the pre-set condition is determined. After the first occurrence of the time point of the rendering task message that satisfies the pre-set condition, the monitoring of the rendering task messages discontinues. In one embodiment of the another method, the monitoring of the rendering task messages continues until an Nth rendering task message is received, where *N* is a pre-set number.

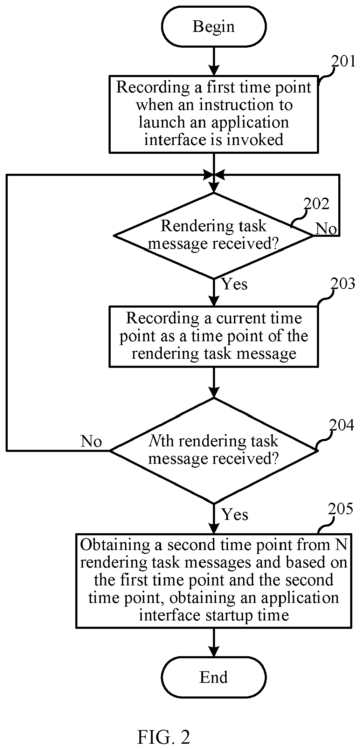

FIG. 2 illustrates a flow chart of another exemplary method for acquiring a startup time of an application interface according to disclosed embodiments. As shown in FIG. 2, the method includes the following process.

At step 201: a terminal device records a first time point when an instruction to launch an application interface is invoked.

At step 202: whether a rendering task message is received is determined. If it is determined that the rendering task message is received, the step 203 is executed. Otherwise, the step 202 is executed again.

At step 203: the current time point is recorded as the time point of the received rendering task message.

The steps 201 through 203 are similar to the steps 101 through 103. To avoid repetition, details are not described herein again.

At step 204, whether the number of the received rendering task messages reaches *N* is determined. If the number of the received rendering task messages reaches *N*, the step 205 is executed. Otherwise, the step 202 is executed to continue to monitor the succeeding rendering task message.

In one embodiment, *N* is the pre-set number. For example, *N* may be configured to be a number greater than 5. In the source program, the terminal device may register to monitor the callback notification of the rendering task execution. When the rendering task message of the current interface in the system message queue is executed, the callback notification is received, and the current time point is recorded. The process continues iteratively until the time point of the *N*th rendering task message is recorded. The terminal device discontinues to monitor the rendering task messages. In most scenarios, the terminal device processes the complicated and time-consuming operations of the application interface startup within a certain number of frames. Collecting the time points of the rendering task messages in the first Nth frames may represent most scenarios for the developers to analyze the performance issues. Further monitoring is unnecessary.

In one embodiment, *N* is configured to be 10. Because the rendering mechanism refreshes the interface stringently according to 60 fps under the circumstances of normal user interactions and smooth interface refreshing, in most scenarios, the complicated and time-consuming operations of the application interface startup are performed mostly in the first 5 frames. If *N* is greater than 5, most scenarios are covered. *N* is configured to be 10 to ensure obtaining the time point of the rendering task message that satisfies the pre-set condition. *N* is configurable. *N* = 10 is considered as a baseline or default. After the massive amount of data are collected and analyzed, *N* may be decreased or increased as needed.

At step 205, a second time point is obtained from the time points of an *N* number of the rendering task messages and based on the first time point and the second time point, the application interface startup time is obtained.

In one embodiment, the terminal device has already recorded the time points of the *N* number of the rendering task messages. Each of the time points is checked. The first occurrence of the time point of the rendering task message that satisfies the pre-set condition is recorded as the second time point. The pre-set condition includes that the time difference between the time point of the rendering task message and the time point of the succeeding rendering task message is equal to the pre-set time duration (e.g., the interval between two adjacent interface refreshing during the process of executing the application program). The second time point is the time point when the application program interface startup is completed. Thus, the time difference between the first time point and the second time point is considered as the application interface startup time.

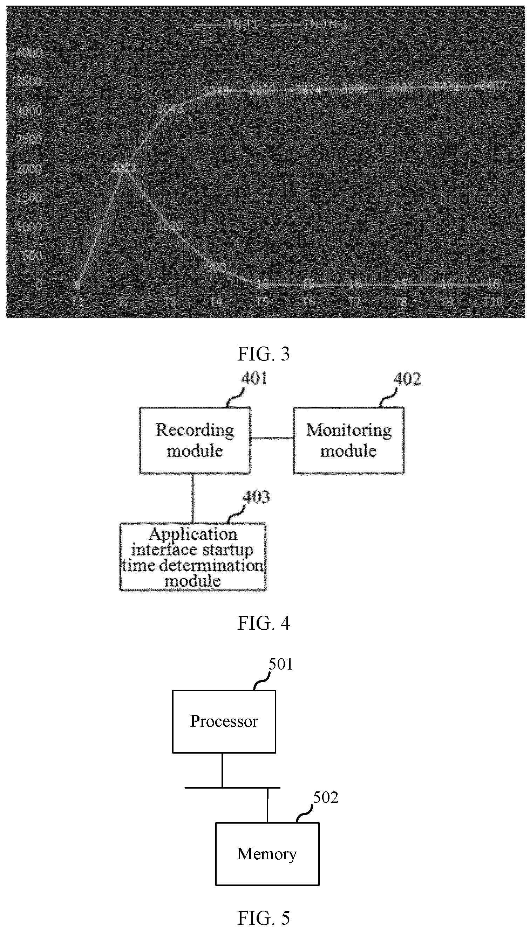

FIG. 3 illustrates a schematic diagram of received rendering task messages over time according to disclosed embodiments. As shown in FIG. 3, T1-T10 are the time points of 10 received rendering task messages. After the application interface starts, three time-consuming operations includes a first one T1-T2 taking 2,023 ms, a second one T2-T3 taking 1,020 ms, and a third one T3-T4 taking 300 ms. The operations afterwards take 16.6 ms at the normal rendering frequency. The total time T1-T4 3,043 ms is the application interface startup time. The developers may search what the three time-consuming operations are based on the above time period information and decide how to optimize the process.

The steps in various methods are divided for the convenience of clear description. Actual implementations may combine one or more steps or further divide one or more steps. As long as the same logical relationship remains intact, modified steps are still within the scope of the present disclosure. Non-essential modifications or design changes may be added to the algorithm or process without changing the core design of the algorithm or process and are hence covered by the present disclosure.

The present disclosure also provides an apparatus for acquiring an application interface startup time. As shown in FIG. 4, the apparatus includes a recording module 401 configured to record a first time point when the instruction to launch the interface is invoked, a monitoring module 402 configured to monitor a rendering task message, and an application interface startup determination module 403 configured to record a time point of a first occurrence of the rendering task message that satisfies a pre-set condition as a second time point from the chronologically recorded time points of a plurality of rendering task messages. The recording module 401 is also configured to record a current time point as the time point of the rendering task message each time the rendering task message is received. The pre-set condition includes that a time difference between the time point of the rendering task message and the time point of the succeeding rendering task message is equal to a pre-set time duration. The time difference between the first time point and the second time point is treated as the application interface startup time.

In one embodiment, the apparatus operates in a similar way as the previously described method embodiments. The apparatus may be coupled with either of the methods in the embodiments of the present disclosure. The pertaining technical details described in the method embodiments are still applicable to the apparatus. To avoid repetition, details are not described herein again. Correspondingly, the pertaining technical details described in the apparatus embodiments are also applicable to the methods.

The modules described in various embodiments of the present disclosure are logic modules. In practical application, a logic unit may be a physical unit, a part of the physical unit, or a combination of a plurality of physical units. In addition, to highlight the innovative part of the present disclosure, other units that are not closely related to solving the technical problems proposed by the present disclosure are not included. But it does not mean that the other units are absent in the embodiments of the present disclosure.

The present disclosure also provides a terminal device. FIG. 5 illustrates a schematic diagram of an exemplary terminal device according to disclosed embodiments. As shown in FIG. 5, the terminal device includes at least one processor 501 and a memory 502 communicatively coupled to the at least one processor 501. The memory 502 stores instructions to be executed by the at least one processor 501. The instructions are executed by the at least one processor 501 to enable the at least one processor 501 to perform the method for acquiring the application interface startup time.

The memory 502 and the processor 501 are connected through a bus. The bus may include any number of interconnected buses and bridges. The bus connects circuits of the at least one processor 501 and the memory 502 together. The bus may further connect other circuits of peripheral devices, voltage regulators, and power management together. Connecting circuit together through the bus is well known in the art and will not be described further. A bus interface is provided to connect the bus and a transceiver together. The transceiver may include a single component or a plurality of components, such as a plurality of receivers and transmitters, configured to communicate with units of other devices through a transmission medium. Data processed by the processor 501 may be transmitted to a wireless medium through an antenna. Further, the antenna may also receive data and transfer the data to the processor 501.

The processor 501 is responsible for the bus coordination and general purpose processing. The processor 501 also supports various other functions including timing synchronization, peripheral interface, voltage regulation, power management, and other control functions. The memory 502 stores data used by the processor 501 in performing operations.

The present disclosure also provides a computer readable storage medium for storing a computer program. The processor executes the computer program to perform the processes in various embodiments of the present disclosure.

Those skilled in the art may appreciate that all or part of the steps in the embodiments of the present disclosure may be implemented by using the computer program to instruct relevant hardware. The computer program stored in the storage medium includes a plurality of instructions to enable a device (such as a microprocessor or an IC chip) or a processor to execute all or part of the steps in the embodiments of the present disclosure. The storage medium includes a USB disk, a portable hard drive, a read-only memory (ROM), a random-access memory (RAM), a magnetic disk, an optical disk, or any suitable medium for storing the program code.

It should be understood by those skilled in the art that the foregoing are merely certain preferred embodiments of the present disclosure and are not intended to limit the present invention. Without departing from the spirit and principles of the present disclosure, any modifications, equivalent substitutions, and improvements, etc. shall fall within the scope of the present disclosure.

## Claims

1. A method for acquiring an application interface startup time, comprising:
recording a first time point when an instruction to launch an application interface is invoked;
monitoring a rendering task message and each time when the rendering task message is received, recording a current time point as a time point of the rendering task message, and recording the time point of a first occurrence of the rendering task message that satisfies a pre-set condition from the chronologically recorded time points of a plurality of rendering task messages as a second time point, wherein the pre-set condition includes that a time difference between the time point of the rendering task message and the time point of a succeeding rendering task message is equal to a pre-set time duration; and
treating a time difference between the first time point and the second time point as the application interface startup time.

2. The method of claim 1, wherein monitoring the rendering task message includes:
continuing to monitor the rendering task message until an Nth rendering task message is received, wherein *N* is a pre-set number.

3. The method of claim 2, wherein:
the pre-set number is greater than 5.

4. The method of claim 1, wherein monitoring the rendering task message includes:
each time when the rendering task message is received, determining whether the time point of a preceding rendering task message satisfies the pre-set condition; and
after the time point of the first occurrence of the rendering task message that satisfies the pre-set condition is recorded, discontinuing the monitoring of the rendering task message.

5. The method of any of claims 1-4, wherein recording the first time point when the instruction to launch the application interface is invoked includes:
monitoring a life cycle of each of all interfaces of the application; and
after a monitoring callback notification of the life cycle of the application interface is received, recording the time point of receiving the monitoring callback notification as the first time point.

6. The method of any of claims 1-4, further including:
uploading the chronologically recorded time points of the plurality of rendering task messages to a server.

7. The method of any of claims 1-4, wherein:
the pre-set time duration is an interval between two adjacent interface refreshing during a process of executing the application program.

8. An apparatus for acquiring an application interface startup time, comprising:
a recording module configured to record a first time point when an instruction to launch an application interface is invoked;
a monitoring module configured to monitor a rendering task message; and
an application interface startup determination module configured to record a time point of a first occurrence of the rendering task message that satisfies a pre-set condition as a second time point from the chronologically recorded time points of a plurality of rendering task messages,
wherein:
the recording module is further configured to record a current time point as the time point of the rendering task message each time the rendering task message is received;
the pre-set condition includes that a time difference between the time point of the rendering task message and the time point of the succeeding rendering task message is equal to a pre-set time duration; and
a time difference between the first time point and the second time point is treated as the application interface startup time.

9. A terminal device, comprising:
at least one processor; and
a memory communicatively coupled to the at least one processor,
wherein:
the memory stores instructions to be executed by the at least one processor; and
the instructions are executed by the at least one processor to enable the at least one processor to perform the method for acquiring the application interface startup time of any of claims 1-7.

10. A computer readable storage medium for storing a computer program, wherein:
the computer program being executed by a processor performs the method for acquiring the application interface startup time of any of claims 1-7.
